# FASCICULE DE BREVET EUROPEEN

(11) **EP 2 111 515 B1**
(45) Date de publication et mention de la délivrance du brevet: **09.03.2011**
(21) Numéro de dépôt: 08761895.5
(22) Date de dépôt: 07.01.2008
(51) Int. Cl.: F16H 61/16, F16H 63/42

(54) **PROCEDE ET DISPOSITIF D'AIDE A LA CONDUITE D'UN VÉHICULE**
VERFAHREN UND VORRICHTUNG ZUR UNTERSTÜTZUNG BEIM FAHREN EINES FAHRZEUGS
METHOD AND DEVICE FOR VEHICLE DRIVING ASSISTANCE

(30) Priorité: 24.01.2007 FR 0700474
(43) Date de publication de la demande: 28.10.2009
(73) Titulaire: Renault SAS, 92100 Boulogne Billancourt (FR)
(72) Inventeur: HABERT, Patrice, F-92160 Antony (FR); VIGERIE, Eric, F-78960 Voisins Le Bretoneux (FR)
(86) Numéro de dépôt international: PCT/FR2008/050017
(87) Numéro de publication internationale: WO 2008/102090

(56) Documents cités:
- DE-A1- 3 912 359
- FR-A1- 2 863 092
- US-A- 4 439 158
- US-A- 4 677 556

## Description

L'invention a pour objet un procédé et un dispositif d'aide à la conduite du groupe moto-propulseur d'un véhicule ayant une boîte de vitesses à commande manuelle ou pilotée en mode manuel.

Un véhicule automobile est entrainé par un groupe moto-propulseur comportant un moteur d'entrainement, un embrayage et une boîte de vitesses permettant de modifier le rapport de transmission entre l'arbre de sortie du moteur et les roues motrices en fonction de la vitesse du véhicule et du couple demandé au moteur.

La boîte de vitesses peut être commandée manuellement par le conducteur ou bien automatiquement, les changements de rapport étant décidés en tenant compte de divers critères et, au moins, de la vitesse du véhicule et de la charge du moteur à l'instant considéré.

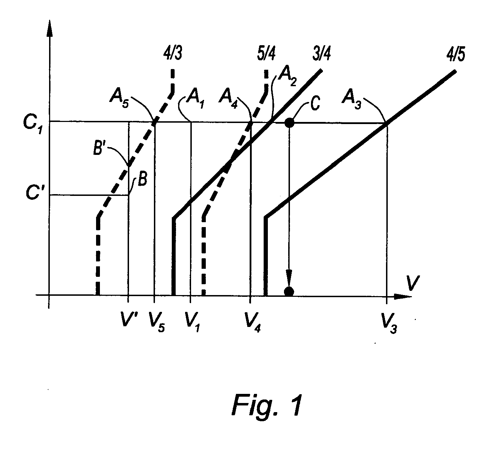

Dans le cas d'une boîte automatique, ces critères sont traduits sous forme de lois de changement de rapports qui peuvent être visualisés de la façon représentée sur la figure 1, dans un diagramme indiquant, en abscisse, la vitesse du véhicule, et, en ordonnée, une information représentative, à chaque instant, de la volonté du conducteur qui peut se traduire par la position de la pédale d'accélérateur ou l'ouverture angulaire d'un papillon d'admission d'air ou, encore, le débit de carburant injecté dans le cas d'un moteur Diesel.

Comme le montre la figure 1, ces lois sont définies de telle sorte que les changements de rapports s'effectuent à des vitesses du véhicule d'autant plus élevées que la charge du moteur est élevée. De plus, les courbes de rapports montants, indiquées en traits pleins sur la figure 1, sont décalées par rapport aux courbes de rapports descendants, de façon que le passage d'un rapport inférieur à un rapport supérieur, par exemple de troisième en quatrième, se fasse, pour une même charge du moteur, c'est-à-dire une même position de la pédale d'accélération, à une vitesse sensiblement supérieure à celle imposant le passage inverse, en rétrogradant, de la quatrième à la troisième. On évite ainsi un phénomène appelé « pompage », c'est-à-dire une instabilité du rapport à proximité des courbes de passage, qui se produirait si les passages en montant ou en descendant s'effectuaient dans les mêmes conditions de vitesses et de charge.

La figure 1 est un simple exemple relativement simple, mais, en réalité, les lois de passage doivent être adaptées aux diverses situations de conduite et il faut tenir compte d'autres facteurs tels que la température du moteur et de la transmission, le profil de la route, qui par exemple, peut interdire une montée à la vitesse supérieure dans un virage et, simplement, la vitesse de lever ou d'enfoncement de la pédale d'accélérateur qui est commandée directement par le conducteur et peut correspondre à un simple reflexe ou une manoeuvre intempestive ne justifiant pas un changement de rapport à l'instant considéré, compte-tenu de la situation de conduite.

De plus, les véhicules modernes comportent d'autres systèmes agissant sur la commande de puissance du moteur tels que des systèmes anti-patinage ou de contrôle de trajectoire ou des limiteurs de vitesses, l'information de demande de puissance provenant alors d'un régulateur.

Dans le cas des boîtes de vitesses automatiques ou robotisées, le changement de rapport doit donc tenir de multiples facteurs et informations sur la situation de conduite. Le rapport à engager est donc déterminé par un calculateur comportant divers blocs de calcul qui combinent les informations reçues de façon à commander judicieusement et au moment adéquat, le changement de rapport, en particulier pour assurer la sécurité de conduite en conservant, à chaque instant, une réserve de puissance nécessaire pour faire face à une situation imprévue.

Les transmissions automatiques ont fait l'objet, depuis longtemps, d'études très poussées et de nombreuses demandes de brevet ont été déposées pour couvrir divers perfectionnement tels que, par exemple, FR-A-2 545 567 portant, en particulier, sur l'inhibition des passages intempestifs vers le rapport supérieur, FR-A-2 863 331 qui a pour objet une anticipation du passage de vitesses permettant, en particulier, d'éviter que le passage en vitesse inférieure intervienne trop tard, par exemple lorsqu'une reprise de vitesse plus rapide aurait été souhaitable ou FR-A-2 864 193 qui a pour objet de détecter une situation de conduite telle que montée, virage, descente, et de déduire de l'intention du conducteur traduite par son action sur la pédale d'accélérateur, soit un blocage du rapport courant, soit un changement de rapport adéquat.

Cependant, les lois de passage des vitesses sont conçues maintenant pour minimiser la consommation de carburant et doivent également tenir compte des contraintes sur les émissions de polluants.

Les systèmes de contrôle des boîtes de vitesses automatiques sont donc de plus en plus complexes car ils doivent tenir compte simultanément de multiples facteurs qui interagissent les uns sur les autres.

En revanche, dans un véhicule à commande manuelle, mécanique ou pilotée, c'est le conducteur qui choisit le moment où il doit changer de rapport, dans le sens montant ou descendant selon la vitesse du véhicule, le régime du moteur et le profil de la route en montée, en descente ou, par exemple, à l'approche d'un virage.

Pour cela, le conducteur apprécie lui-même, visuellement le profil de la route et tient compte de la vitesse du véhicule indiquée au tableau de bord ainsi que, éventuellement, d'un compte-tours indiquant le régime du moteur.

Il est plus difficile, en revanche, pour le conducteur, d'apprécier lui-même le rapport qu'il doit engager pour réduire sa consommation et les rejets polluants.

Le critère d'économie de carburant étant important pour les poids lourds, on a déjà proposé depuis quelques années, des systèmes d'aide à la conduite indiquant au conducteur le rapport préconisé.

Le document FR-A-2 431 737, par exemple, décrit un dispositif de ce type comportant un calculateur tenant compte des valeurs instantanées du régime du moteur, de la vitesse du véhicule et de la charge, mesurées par des capteurs, pour afficher de façon visuelle ou sonore, des indications relatives à la consommation en carburant, et le cas échéant, la nécessité de monter ou descendre le rapport de la boîte de vitesses.

Le document DE 3912 359 A1 décrit un dispositif d'aide à la conduite et un procédé associé conformément aux préambules respectivement des revendications 1 et 7.

En particulier, un tableau lumineux sur lequel sont indiquées différentes courbes d'égale consommation en carburant, matérialise le diagramme couple/régime, de façon à permettre au conducteur de vérifier, à chaque instant s'il se trouve dans une plage optimale de consommation.

Ces indications sont fournies par un calculateur en fonction du couple demandé au moteur par le conducteur qui peut être exprimé, par exemple, par la position de la pédale d'accélérateur.

La prise de conscience des impératifs écologiques et l'évolution de la réglementation conduisent, cependant, à généraliser de tels systèmes d'aide à la conduite à l'ensemble des véhicules afin de donner à tous les conducteurs les moyens de réduire leur consommation en carburant.

Ceci est possible, pour les véhicules à boîte automatique, en introduisant de nouvelles contraintes dans les calculateurs de contrôle mais il devient nécessaire de mettre en place également, dans les véhicules à boîte manuelle, un système indiquant au conducteur, par exemple par affichage visuel ou sonore, le rapport préconisé pour réduire sa consommation et les rejets polluants.

Le document US 4 439 158, par exemple, décrit un système de ce genre pour un véhicule à boîte de vitesses manuelle et embrayage, dans lequel l'indication des changements de rapports est calculée à partir du régime du moteur, du rapport de réduction de la transmission et de la charge du moteur ainsi que d'autres facteurs, tels que la température du moteur, la vitesse du véhicule et la charge transportée.

Le document FR-A-2 863 092 décrit également un système d'affichage d'un rapport préconisé comportant un élément de calcul de la valeur de ce rapport à partir d'une cartographie de lois de passage, en fonction de la vitesse du véhicule et d'une variable représentative de la charge appliquée au moteur et exprimée, par exemple, par la position de la pédale d'accélérateur. La valeur ainsi déterminée du rapport préconisé est ensuite corrigée par un bloc de correction recevant en entrée diverses informations relatives à la pente de la route, à la vitesse du véhicule, l'accélération instantanée et celle que le véhicule aurait sur le rapport supérieur, le régime de rotation du moteur, le style de conduite choisi, la position de la pédale d'accélérateur et sa vitesse d'enfoncement, l'état d'activation du freinage, etc...

Un tel système tenant compte d'informations multiples dont les effets se combinent est très complexe et, par conséquent, nécessite des moyens de calcul encombrants et onéreux.

Cependant, il apparaît nécessaire, pour respecter des règlementations de plus en plus sévères, d'équiper de tels systèmes d'aide à la conduite, des véhicules de tous types. L'invention a donc pour objet de résoudre ce problème grâce à un nouveau procédé d'aide à la conduite pouvant être mis en oeuvre par des moyens simples, peu onéreux et d'un encombrement limité.

De façon connue, le véhicule est équipé d'un système de contrôle avec un calculateur dans lequel est intégré une cartographie de lois de passage de vitesses à partir de laquelle est déterminé, en fonction de la vitesse du véhicule à chaque instant, le rapport à préconiser pour une consommation optimale en carburant et un rejet minimal de polluants.

Conformément à l'invention, le rapport préconisé est corrigé par étapes successives en tenant compte, l'une après l'autre, d'un ensemble de contraintes relatives à la sécurité et à l'agrément de conduite, chaque étape étant prioritaire par rapport à la précédente, de façon que le rapport finalement préconisé constitue un compromis optimal entre ces différentes contraintes, en privilégiant la sécurité de conduite.

De façon particulièrement avantageuse, le calculateur comprend une pluralité de modules de calcul séparés, affectés à chacune des contraintes à prendre en considération et, à chaque étape de correction, le module correspondant vérifie la pertinence de la valeur du rapport préconisé à l'étape précédente avec la contrainte dont tient compte ledit module et, selon le résultat de la vérification, détermine, soit le passage direct à l'étape suivante avec maintien du rapport préconisé à l'étape précédente, soit une modification de ce rapport préconisé dans le sens montant ou descendant.

Dans le cas habituel où l'information de volonté du conducteur est représentée par le degré d'enfoncement de la pédale d'accélérateur, la vitesse d'enfoncement de la pédale est mesurée et un enfoncement trop lent, au-dessous d'une vitesse donnée, inhibe toute demande de changement de rapport dans le sens descendant sans interdire une montée de rapport en cas d'augmentation de la vitesse du véhicule.

De même, les demandes de changement de rapport en montant sont suspendues en cas de levée rapide de la pédale à une vitesse supérieure à un seuil donné.

L'invention couvre également un dispositif pour la mise en oeuvre du procédé caractérisé par le fait que le calculateur comporte, d'une part un élément de détermination du rapport préconisé pour une consommation optimale en carburant, en fonction d'une information de volonté du conducteur, compte-tenu de la vitesse du véhicule et, d'autre part, une pluralité de modules de calcul séparés indépendants les uns des autres et affectés chacun à une contrainte de conduite déterminée, lesdits modules étant disposés en série de façon à apporter chacun, en cas de besoin, une correction à la valeur du rapport préconisé adaptée à la contrainte considérée et dans un ordre privilégiant la qualité de conduite, chaque correction apportée, le cas échéant, par un module, étant prioritaire par rapport à la correction apportée par le module précédent.

Dans un mode de réalisation préférentiel, le calculateur comporte un bloc de sélection d'une loi de passage en fonction d'informations représentatives, à chaque instant, du profil de la route et de l'état du groupe moto-propulseur et un bloc de gestion des lois déterminant un rapport préconisé en fonction de la loi sélectionnée et d'une information de volonté du conducteur, compte-tenu, à chaque instant, de la vitesse et, le cas échéant, de l'action exercée sur les freins.

De façon particulièrement avantageuse, les modules de correction indépendants, disposés en série et affectés chacun à une contrainte de conduite, comportent chacun une entrée d'un signal correspondant à la valeur du rapport préconisé à l'étape précédente, une entrée d'un ou plusieurs signaux représentatifs des paramètres à prendre en compte pour l'activation, le cas échéant, du modèle, une sortie directe de transmission à l'étape suivante, sans activation du module, de la valeur du rapport préconisé à l'étape précédente et une sortie de transmission à l'étape suivante, après activation du module, du rapport corrigé en fonction de la contrainte considérée.

Selon une autre caractéristique préférentielle, la série de modules de correction comporte successivement à partir de la détermination du rapport de consommation optimale, au moins :
- un module anti-pompage pour le maintien, à chaque instant, d'une réserve de puissance suffisante,
- un module de figeage pour le maintien du rapport engagé tant que les conditions de sécurité ne sont pas remplies, et en cas de détection d'un passage en virage,
- un module d'anti-enchainement et d'anticipation, pour suspendre une demande de changement du rapport trop rapprochée de la précédente, et pour temporiser les demandes si le conducteur effectue un changement de rapport contraire à la préconisation.

De façon avantageuse, l'élément de détermination du rapport préconisé pour une consommation optimale est suivi immédiatement d'un module d'inhibition activé par une mesure de la vitesse d'enfoncement de la pédale d'accélérateur qui, en cas d'enfoncement lent au-dessous d'une vitesse donnée, maintient la valeur du rapport engagé qui est ensuite soumise aux corrections successives éventuellement nécessaires pour la détermination finale du rapport préconisé à indiquer au conducteur.

D'autres caractéristiques avantageuses de l'invention apparaîtront dans la description suivante dans un mode de réalisation particulier, décrit à titre d'exemple, en référence aux dessins annexés.
La figure 1 est un diagramme couple/vitesse indiquant un exemple de lois de passage des vitesses dans le sens montant et descendant.
La figure 2 est un schéma général montrant l'architecture globale du système selon l'invention pour l'affichage d'un rapport préconisé.
La figure 3 est un organigramme montrant l'enchainement des étapes successives du procédé.

Le diagramme couple/vitesse de la figure 1 est un exemple de cartographie de lois de passage indiquant, en fonction de la vitesse du véhicule, à quel moment le conducteur doit passer à un rapport supérieur, en cas d'accélération ou bien à un rapport inférieur pour rétrograder, par exemple dans le cas d'une montée ou en cas de freinage avant l'arrivée dans un virage.

Par exemple, à partir d'un point A1 pour lequel la troisième vitesse est enclenchée et correspondant à une vitesse V1 du véhicule, l'enfoncement C1 de la pédale d'accélérateur commande une montée en vitesse progressive du véhicule avec, pour une position constante de la pédale, un passage en quatrième au point A2 à la vitesse V2 puis en cinquième au point A3, à la vitesse V3.

Si le véhicule ralentit, par exemple dans une rampe, sans action sur la pédale d'accélérateur, il faut repasser de cinquième en quatrième au point A4, à la vitesse V4, puis de quatrième en troisième au point A5, à la vitesse V5.

De même, à partir d'un point B correspondant à une vitesse V' du véhicule et à une position C' de la pédale d'accélérateur, pour maintenir cette vitesse V', par exemple dans une rampe, en augmentant le couple demandé, il faut enfoncer la pédale d'accélérateur et rétrograder de quatrième en troisième au point B'.

Sur le diagramme, les courbes en traits pleins correspondent respectivement au passage de troisième en quatrième et de quatrième en cinquième et les courbes en tirets correspondent respectivement au passage de cinquième en quatrième et de quatrième en troisième.

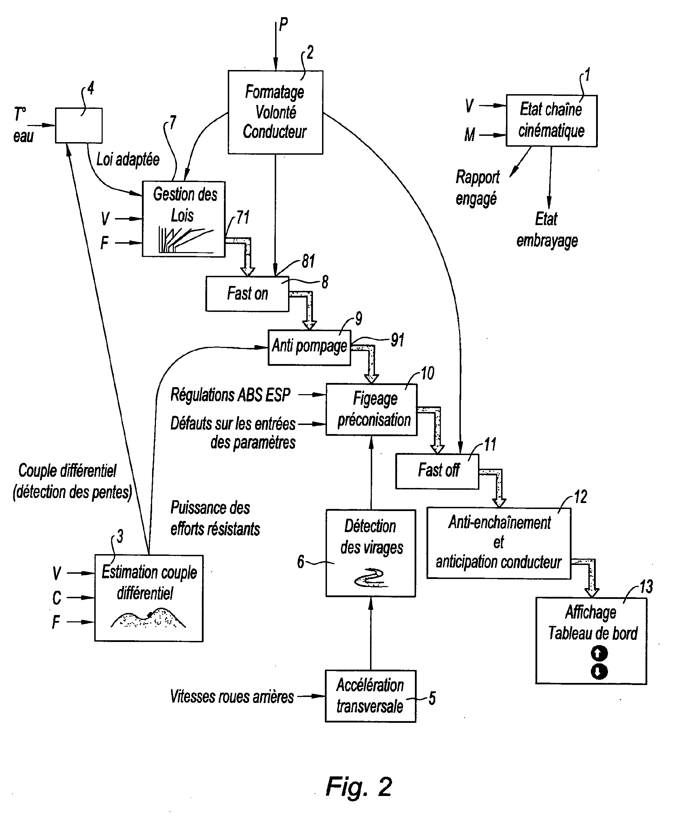

L'architecture globale du système d'affichage du rapport préconisé est représentée sur la figure 2.

Le système utilise un certain nombre d'informations déjà présentes dans le contrôle moteur et mesurées par des capteurs, telles que la vitesse du véhicule V, le régime du moteur M et une information de volonté du conducteur exprimant une consigne cible de puissance et construite, par exemple, à partir de la position P de la pédale d'accélérateur, la vitesse du véhicule, la température T de l'eau de refroidissement du moteur.

Le calculateur comporte plusieurs blocs d'estimation par calcul de certaines sous-fonctions.

Ainsi, un bloc de calcul 1 détermine l'état de la chaîne cinématique à partir du ratio vitesse/régime et produit en sortie des signaux représentatifs du rapport courant engagé et de l'état ouvert ou fermé de l'embrayage, qui sont affichés sur les différents modules de calcul.

Un bloc 3 sur lequel sont affichés des signaux représentatifs de la vitesse du véhicule V, du couple moteur estimé C et de l'état d'activation des freins F, calcule la puissance de l'ensemble des efforts résistants et estime le couple différentiel à fournir en fonction de la pente de la route, de la charge du véhicule et, éventuellement, du vent.

Pour cela, le bloc 3 peut utiliser les équations de la dynamique de la façon décrite par exemple, dans le document FR-A-2 822 972.

En effet, chacun des modules séparés utilisés, selon l'invention, pour le calcul des différents paramètres nécessaires aux corrections successives du rapport préconisé, peut utiliser les éléments de calcul mis au point auparavant pour tenir compte, dans une boîte de vitesses automatique, des diverses contraintes.

Par exemple, le rapport préconisé peut être adapté à une situation de descente, d'une façon analogue à la stratégie décrite dans le document FR-A-2 791 751.

Le bloc de calcul 4 sélectionne la loi de passage appropriée à chaque instant en fonction du profil de la route et des conditions moteur.

A partir de la loi sélectionnée, un module 7 de gestion des lois détermine à chaque instant le rapport de transmission adapté, en fonction de la vitesse du véhicule, de l'état d'activation des freins et d'une information de volonté du conducteur représentée, par exemple, par la position P de la pédale d'accélération. Avantageusement, cette information peut être exprimée par un signal fourni par un bloc de formatage 2 permettant d'éviter de préconiser un rapport non souhaitable, par exemple, en cas de lever de pied rapide, en réaction à une situation imprévue.

Comme indiqué plus haut, la cartographie de lois de passage intégrée dans le module de gestion 7 est prévue essentiellement pour assurer une consommation optimale et un rejet minimal de polluants.

Le module de gestion 7 émet donc, à sa sortie 71, un signal représentatif de ce rapport de consommation optimale qui va ensuite être soumis à une succession de modules de correction disposés en série et affectés respectivement aux contraintes essentielles à prendre en compte pour assurer la sécurité de conduite.

Tout d'abord, ce rapport de consommation optimal est affiché à l'entrée d'un module d'inhibition 8 dit « fast on », activé par une mesure 81 de la vitesse d'enfoncement de la pédale d'accélérateur, représentée par un signal fourni par le bloc 2 de formatage de l'information de volonté et qui, en cas d'enfoncement lent de la pédale, au-dessous d'une vitesse donnée, maintient la valeur du rapport engagé en inhibant, par conséquent, une demande de rétrogradation non appropriée.

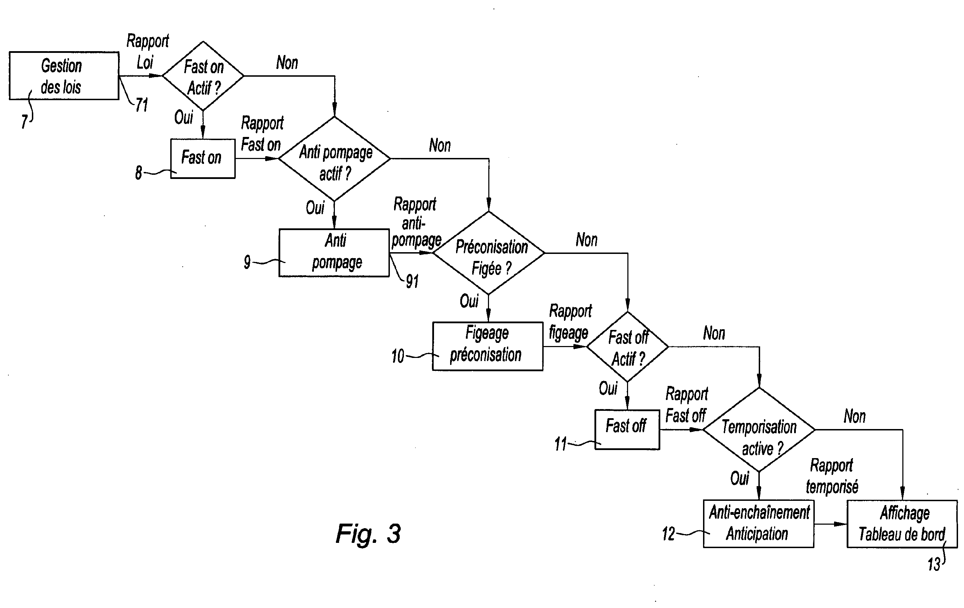

Comme l'indique l'organigramme de la figure 3, le premier module 9 de correction anti-pompage reçoit donc, soit le rapport préconisé par le module de gestion 7 lorsque le module « fast on » 8 n'est pas activé, soit la valeur du rapport engagé en cas d'enfoncement trop lent de la pédale et vérifie la pertinence de l'affichage de l'un ou l'autre de ces deux rapports avec l'estimation du couple différentiel fourni par le bloc d'estimation 3 afin d'éviter un état instable dit de pompage, en particulier en situation de montée. Pour cela, il est possible d'utiliser les équations indiquées dans le document FR-A-2 842 579 ou une stratégie de changement de rapport du type décrit dans le document FR-A-2 545 567.

En cas de risque de pompage, le rapport préconisé est donc corrigé et le signal correspondant émis à la sortie 91 du module 9, ou bien le signal correspondant au rapport de consommation optimale est transmis directement lorsque le module 9 anti-pompage n'est pas actif, pour être affiché à l'entrée du module de correction suivant 10 destiné à assurer la sécurité de conduite en cas de détection d'un passage en virage.

On connaît déjà, dans le cas des boîtes de vitesses automatiques, des stratégies d'adaptation du rapport de transmission à une situation de virage.

Par exemple, le document FR-A-2 779 793 décrit un procédé dans lequel, à partir de mesures de l'accélération transversale du véhicule, du régime de rotation du moteur, de la vitesse du véhicule et du couple moteur, on détermine si le véhicule est en situation de virage et, dans ce cas, on choisit de conserver le rapport engagé ou de rétrograder à la vitesse inférieure en fonction de la détection des efforts résistants appliqués au véhicule.

De la même façon, une situation de virage peut être détectée par un bloc de calcul 6 en tenant compte de l'accélération transversale déterminée par un bloc de calcul 5 à partir des vitesses des roues arrières et compte-tenu des autres informations fournies par le bloc 1 à destination de la chaîne cinématique.

Ces informations sont appliquées à l'entrée du module de correction en virage10 qui vérifie si le rapport préconisé, correspondant au signal émis à la sortie 91 du module anti-pompage 9, est compatible avec la situation de virage ainsi détectée. Ainsi, toute demande de changement de rapport non sécurisée peut être inhibée, la préconisation étant figée.

D'autres informations relatives à un changement de rapport non sécurisé, par exemple pendant une régulation ABS ou ESP sont également affichées sur le module de correction 10 de façon à figer la préconisation en cas de besoin, en maintenant le rapport engagé à cet instant.

De même, le module 10 peut figer la préconisation en cas de défaut ou d'erreur manifeste sur certains paramètres nécessaires aux différents calculs.

Le rapport préconisé par le module anti-pompage 9 ou le rapport engagé, en cas de figeage de la préconisation, est affiché sur un module 11 dit « fast off » qui temporise les demandes de montant sur une levée trop rapide de la pédale d'accélérateur de façon à transmettre au module suivant 12 un signal correspondant soit au rapport préconisé et corrigé, soit au rapport engagé.

Ce module d'anticipation 12 vérifie l'intervalle de temps entre deux demandes successives de changement de rapport afin de suspendre une demande de changement de rapport trop rapprochée de la précédente et dont la prise en compte pourrait être dangereuse.

Le rapport préconisé ainsi déterminé pour une consommation optimale puis éventuellement corrigé en fonction de la situation de conduite, est appliqué sur un bloc 13 qui convertit le signal correspondant entre une demande de montant ou de rétro puis la formate en une information servant, par exemple, à un affichage visuel sur le tableau de bord.

Ainsi, la stratégie définie par l'organigramme de la figure 3 permet de préconiser une demande de changement de rapport toujours appropriée au profil de la route et permettant d'optimiser la consommation en carburant et de réduire les émissions de polluants tout en assurant la sécurité et l'agrément de conduite.

Cependant, d'autres fonctions pourraient être assurées, l'invention ne se limitant pas aux détails du mode de réalisation qui vient d'être décrit à titre de simple exemple.

En effet, l'architecture modulaire de ce dispositif d'aide à la conduite permet facilement d'enlever une correction ou en ajouter une nouvelle.

D'une façon générale, l'utilisation de modules de correction disposés en série et appliquant chacun une correction prioritaire par rapport à la précédente, après en avoir vérifié la pertinence, permet de simplifier le logiciel du calculateur qui peut être plus compact.

## Revendications

1. Dispositif d'aide à la conduite d'un groupe moto-propulseur d'un véhicule comportant un moteur d'entrainement, un embrayage et une boîte de vitesses à commande manuelle, mécanique ou pilotée, dispositif comportant un moyen (13) d'indication au conducteur d'un rapport de transmission préconisé, commandé par un système de contrôle comportant un calculateur dans lequel est intégrée au moins une cartographie de lois de passage de vitesses pour la détermination d'un rapport préconisé en fonction d'une information de volonté (2) du conducteur, compte-tenu d'un ensemble de signaux appliqués aux entrées du calculateur et représentatifs des conditions de circulation du véhicule à chaque instant, le calculateur comportant, d'une part un élément (7) de détermination du rapport préconisé pour une consommation optimale en carburant, en fonction d'une information de volonté (2) du conducteur et compte-tenu de la vitesse (V) du véhicule et **caractérisé par le fait que** le calculateur comporte d'autre part, une pluralité de modules de calcul séparés (8-12), indépendants les uns des autres et affectés chacun à une contrainte de conduite déterminée, lesdits modules (8-12) étant disposés en série de façon à apporter chacun, en cas de besoin, une correction à la valeur du rapport préconisé adaptée à la contrainte considérée et dans un ordre privilégiant la sécurité de conduite, chaque correction apportée, le cas échéant, par un module, étant prioritaire par rapport à la correction apportée par le module précédent.

2. Dispositif selon la revendication 1, **caractérisé par le fait que** le calculateur comporte un bloc (4) de sélection d'une loi de passage en fonction d'informations représentatives, à chaque instant, du profil de la route et de l'état du groupe moto-propulseur et un module (7) de gestion des lois déterminant un rapport préconisé en fonction de la loi sélectionnée et d'une information de volonté (2) du conducteur, compte-tenu, à chaque instant, de la vitesse (V) et, le cas échéant, de l'action (F) exercée sur les freins.

3. Dispositif selon l'une des revendications 1 et 2, **caractérisé par le fait que** le calculateur comporte une pluralité de modules de correction indépendants (8-12), disposés en série et affectés chacun à une contrainte de conduite, chaque module comportant une entrée d'un signal correspondant à la valeur du rapport préconisé à l'étape précédente, une entrée d'un ou plusieurs signaux représentatifs des paramètres à prendre en compte pour l'activation, le cas échéant, du module, une sortie directe de transmission à l'étape suivante, sans activation du module, de la valeur du rapport préconisé à l'étape précédente et une sortie de transmission à l'étape suivante, après activation du module, du rapport corrigé en fonction de la contrainte considérée.

4. Dispositif selon la revendication 3, **caractérisé par le fait que** la série de modules de correction comporte successivement à partir de la détermination du rapport de consommation optimale, au moins :
- un module anti-pompage (9) pour le maintien, à chaque instant, d'une réserve de puissance suffisante,
- un module de figeage (10) pour le maintien du rapport engagé tant que les conditions de sécurité ne sont pas remplies et en cas de détection (6) d'un passage en virage,
- un module d'anti-enchainement et d'anticipation (12) pour suspendre une demande de changement du rapport trop rapprochée de la précédente, ou pour temporiser toute demande de changement effectuée par le conducteur et contraire à la préconisation.

5. Dispositif selon la revendication 4, **caractérisé par le fait que** le module (7) de détermination du rapport préconisé pour une consommation optimale est suivi immédiatement d'un module d'inhibition (8) activé par une mesure de la vitesse d'enfoncement de la pédale d'accélération qui, en cas d'enfoncement lent au-dessous d'une vitesse donnée, maintient la valeur du rapport engagé qui est ensuite soumise aux corrections successives (9-12) éventuellement nécessaires pour la détermination finale (13) du rapport préconisé à indiquer au conducteur.

6. Dispositif selon l'une des revendications précédentes, dans lequel l'information de volonté du conducteur est représentée par le degré d'enfoncement de la pédale d'accélérateur, **caractérisé par le fait qu'**il comporte des moyens de mesure de la vitesse d'enfoncement et de redressement de la pédale et un module (11) de temporisation des demandes de changement de rapport en montant, en cas de lever rapide de la pédale à une vitesse supérieure à un seuil donné.

7. Procédé d'aide à la conduite d'un groupe moto-propulseur d'un véhicule, comportant un moteur d'entrainement, un embrayage et une boîte de vitesses à commande manuelle du changement de rapport, le véhicule étant équipé d'un système de contrôle avec un calculateur commandant l'indication pour le conducteur d'un rapport préconisé en fonction d'une information de volonté du conducteur et en tenant compte d'une part d'un ensemble de paramètres relatifs aux conditions de circulation du véhicule à chaque instant et, d'autre part, d'une cartographie de lois de passage des vitesses à partir de laquelle est déterminé, en fonction de la vitesse du véhicule à chaque instant, le rapport à préconiser pour une consommation optimale en carburant et un rejet minimal de polluants, **caractérisé par le fait que** le rapport préconisé est corrigé par étapes successives en tenant compte, l'une après l'autre, d'un ensemble de contraintes relatives à la sécurité et à l'agrément de conduite, chaque étape étant prioritaire par rapport à la précédente, de façon que le rapport finalement préconisé constitue un compromis optimal entre ces différentes contraintes, en privilégiant la sécurité de conduite.

8. Procédé selon la revendication 7, **caractérisé par le fait que** le calculateur comprend une pluralité de modules de calcul séparés, affectés respectivement à chacune des contraintes à prendre en considération et que, à chaque étape de correction, le module correspondant vérifie la pertinence de la valeur du rapport préconisé à l'étape précédente, avec la contrainte dont tient compte ledit module et, selon le résultat de la vérification, détermine, soit le passage direct à l'étape suivante avec maintien du rapport préconisé à l'étape précédente, soit une modification de ce rapport préconisé dans le sens montant ou descendant.

9. Procédé selon l'une des revendications 7 et 8, dans lequel l'information de volonté du conducteur est représentée par le degré d'enfoncement de la pédale d'accélération, **caractérisé par le fait que** la vitesse d'enfoncement de la pédale est mesurée et un enfoncement lent, au-dessous d'une vitesse donnée, inhibe toute demande de changement de rapport dans le sens descendant sans interdire une montée de rapport en cas d'augmentation de la vitesse du véhicule.

10. Procédé selon l'une des revendications 7, 8 et 9, **caractérisé par le fait que** toute demande de changement de rapport non sécurisée est inhibée, la préconisation étant figée.

## Claims

1. Device to assist with the control of a propulsion unit of a vehicle comprising a drive engine, a clutch and a manual, mechanical or semi-automatic gearbox, the device comprising a means (13) of indicating to the driver a recommended transmission ratio, controlled by a control system comprising a computer into which there is incorporated at least one map of gear-change laws for determining a recommended gear ratio as a function of information (2) concerning the driver's wishes, giving due consideration to a set of signals applied to the inputs of the computer and which are representative of the driving conditions of the vehicle at each instant, the computer comprising, on the one hand, an element (7) for determining the recommended gear ratio for optimum fuel consumption, as a function of information (2) concerning the wishes of the driver and with due consideration given to the speed (V) of the vehicle and **characterized in that** the computer comprises, on the other hand, a plurality of separate calculation modules (8-12) independent of one another and each assigned to a determined driving constraint, said modules (8-12) being arranged in series so that if need be each can apply to the value of the recommended gear ratio a correction suited to the constraint considered and in an order that favors driving safety, each correction applied, as appropriate, by a module, taking priority over the correction applied by the preceding module.

2. Device according to Claim 1, **characterized in that** the computer comprises a unit (4) for selecting a gear-change law as a function of information representative, at each instant, of the profile of the route and of the condition of the propulsion unit and a law management module (7) determining a recommended gear ratio as a function of the selected law and of information (2) concerning the wishes of the driver, with due consideration, at each instant, to the speed (V) and, as appropriate, to the action (F) applied to the brakes.

3. Device according to either of Claims 1 and 2, **characterized in that** the computer comprises a plurality of independent correction modules (8-12), arranged in series and each assigned to a driving constraint, each module comprising an input for a signal corresponding to the value of the gear ratio recommended in the preceding step, an input for one or more signals representative of the parameters to be considered when activating the module if appropriate, a direct output for forwarding to the next step, without activation of the module, the value of the gear ratio recommended in the preceding step, and an output for forwarding to the next step, following activation of the module, the gear ratio that has been corrected as a function of the constraint considered.

4. Device according to Claim 3, **characterized in that** the series of correction modules comprises, in succession, starting from the determining of the gear ratio of optimum fuel consumption, at least:
- an anti-hunting module (9) in order at each instant to maintain a sufficient reserve of power,
- a fixing module (10) for maintaining the gear ratio engaged for as long as safety conditions are not met and in the event that it is detected (6) that the vehicle has started to corner,
- an anticipation and anti-linking module (12) to suspend a gear-change demand that comes too soon after the preceding one, or to time out any gear-change demand made by the driver and which is contrary to the recommendation.

5. Device according to Claim 4, **characterized in that** the module (7) for determining the recommended gear ratio for optimum fuel consumption is immediately followed by an inhibition module (8) which is activated by a measurement of the rate at which the accelerator pedal is depressed and which, if it is depressed slowly below a given rate, maintains the value of the gear ratio engaged which is then subjected to any successive corrections (9-12) that might be needed in order finally to determine (13) the recommended gear ratio to be indicated to the driver.

6. Device according to one of the preceding claims, in which the information concerning the wishes of the driver is represented by the degree to which the accelerator pedal is depressed, **characterized in that** it comprises means of measuring the rate at which the pedal is depressed and springs back and a module (11) for applying a timeout to upshift gear-change demands if the pedal lifts rapidly at a rate higher than a given threshold.

7. Method to assist with the control of a propulsion unit of a vehicle comprising a drive engine, a clutch and a manual gearbox, the vehicle being equipped with a control system with a computer controlling the indication to the driver of a gear ratio that is recommended as a function of information concerning the wishes of the driver and with due consideration to, on the one hand, a set of parameters relating to the vehicle driving conditions at each instant and, on the other hand, to a map of gear-change laws on the basis of which there is determined, as a function of the speed of the vehicle at each instant, the gear ratio to be recommended for optimum fuel consumption and minimum pollutant emissions, **characterized in that** the recommended gear ratio is corrected in successive steps giving due consideration, one after the other, to a set of constraints relating to safety and drivability, each step taking priority over the preceding one, so that the gear ratio finally recommended is an optimum compromise between these various constraints, favoring driving safety.

8. Method according to Claim 7, **characterized in that** the computer comprises a plurality of separate calculation modules respectively assigned to each of the constraints to be taken into consideration, and **in that**, in each correction step, the corresponding module checks the relevance of the value of the gear ratio recommended in the preceding step to the constraint with which said module is concerned, and, depending on the result of the check, determines either to move directly on to the next step, maintaining the gear ratio recommended in the preceding step, or to modify this recommended gear ratio either upward or downward.

9. Method according to either of Claims 7 and 8, in which the information concerning the wishes of the driver is represented by the degree to which the accelerator pedal is depressed, **characterized in that** the rate at which the pedal is depressed is measured and slow depressing, below a given rate, inhibits any demand to downshift without preventing an upshift in the event that the speed of the vehicle increases.

10. Method according to one of Claims 7, 8 and 9, **characterized in that** any unsafe demand to change gear is inhibited, the recommendation then being fixed.

## Patentansprüche

1. Fahrhilfe-Vorrichtung einer Antriebseinheit eines Fahrzeugs, das einen Antriebsmotor, eine Kupplung und ein Schaltgetriebe mit manueller, mechanischer oder gesteuerter Betätigung aufweist, wobei die Vorrichtung eine Einrichtung (13) aufweist, um dem Fahrer einen empfohlenen Gang anzuzeigen, die von einem Kontrollsystem betätigt wird, das einen Rechner aufweist, in den mindestens ein Kennfeld von Gangschaltungsgesetzen für die Bestimmung eines empfohlenen Gangs in Abhängigkeit von einer Information (2) über den Willen des Fahrers integriert ist, unter Berücksichtigung einer Gruppe von Signalen, die an die Eingänge des Rechners angelegt werden und für die Fahrbedingungen des Fahrzeugs in jedem Zeitpunkt repräsentativ sind, wobei der Rechner einerseits ein Element (7) zur Bestimmung des empfohlenen Gangs für einen optimierten Kraftstoffverbrauch abhängig von einer Information (2) über den Willen des Fahrers und unter Berücksichtigung der Geschwindigkeit (V) des Fahrzeugs aufweist, und **dadurch gekennzeichnet, dass** der Rechner andererseits mehrere getrennte Rechenmodule (8-12) aufweist, die voneinander unabhängig und je einer bestimmten Fahrbeanspruchung zugeteilt sind, wobei die Module (8-12) in Reihe angeordnet sind, um jedes im Bedarfsfall eine Korrektur am Wert des empfohlenen Gangs, die an die betreffende Beanspruchung angepasst ist, und in einer Reihenfolge auszuführen, die die Fahrsicherheit bevorzugt, wobei jede ggf. von einem Modul durchgeführte Korrektur bezüglich der durch das vorhergehende Modul durchgeführten Korrektur prioritär ist.

2. Vorrichtung nach Anspruch 1, **dadurch gekennzeichnet, dass** der Rechner einen Block (4) zur Auswahl eines Schaltgesetzes in Abhängigkeit von Informationen, die in jedem Zeitpunkt für das Profil der Straße und den Zustand der Antriebseinheit repräsentativ sind, und ein Modul (7) zur Verwaltung der Gesetze aufweist, das einen empfohlenen Gang in Abhängigkeit von dem ausgewählten Gesetz und von einer Information (2) über den Willen des Fahrers bestimmt, unter Berücksichtigung, in jedem Zeitpunkt, der Geschwindigkeit (V) und ggf. der auf die Bremsen ausgeübten Tätigkeit (F).

3. Vorrichtung nach einem der Ansprüche 1 und 2, **dadurch gekennzeichnet, dass** der Rechner mehrere unabhängige Korrekturmodule (8-12) aufweist, die in Reihe angeordnet und je einer Fahrbeanspruchung zugeteilt sind, wobei jedes Modul einen Eingang eines Signals, das dem Wert des im vorhergehenden Schritt empfohlenen Gangs entspricht, einen Eingang eines oder mehrerer Signale, die für Parameter repräsentativ sind, die für die Aktivierung, wenn nötig, des Moduls zu berücksichtigen sind, einen direkten Ausgang der Übertragung zum folgenden Schritt, ohne Aktivierung des Moduls, des Werts des im vorhergehenden Schritt empfohlenen Gangs, und einen Ausgang der Übertragung zum folgenden Schritt, nach Aktivierung des Moduls, des in Abhängigkeit von der betroffenen Beanspruchung korrigierten Gangs aufweist.

4. Vorrichtung nach Anspruch 3, **dadurch gekennzeichnet, dass** die Reihe von Korrekturmodulen nacheinander ausgehend von der Bestimmung des Gangs mit optimalem Verbrauch mindestens aufweist:
- ein Pumpverhinderungsmodul (9) für die Aufrechterhaltung einer ausreichenden Leistungsreserve in jedem Zeitpunkt,
- ein Fixiermodul (10) für die Beibehaltung des eingelegten Gangs, so lange die Sicherheitsbedingungen nicht erfüllt sind und im Fall der Erfassung (6) eines Durchgangs durch eine Kurve,
- ein Verkettungsschutz- und Antizipierungsmodul (12), um eine Änderungsforderung des Gangs auszusetzen, die zu nahe bei der vorhergehenden liegt, oder um jede Änderungsforderung zu verzögern, die vom Fahrer durchgeführt wird und mit der Empfehlung unvereinbar ist.

5. Vorrichtung nach Anspruch 4, **dadurch gekennzeichnet, dass** auf das Modul (7) zur Bestimmung des für einen optimalen Verbrauch empfohlenen Gangs direkt ein durch eine Messung der Niederdrückgeschwindigkeit des Gaspedals aktiviertes Sperrmodul (8) folgt, das im Fall eines langsamen Niederdrückens unter einer gegebenen Geschwindigkeit den Wert des eingelegten Gangs beibehält, der anschließend den aufeinanderfolgenden Korrekturen (9-12) unterzogen wird, die ggf. für die endgültige Bestimmung (13) des dem Fahrer anzuzeigenden, empfohlenen Gangs notwendig sind.

6. Vorrichtung nach einem der vorhergehenden Ansprüche, bei der die Information über den Willen des Fahrers durch den Niederdrückgrad des Gaspedals dargestellt wird, **dadurch gekennzeichnet, dass** sie Einrichtungen zur Messung der Geschwindigkeit des Niederdrückens und Wiederaufrichtens des Pedals und ein Modul (11) zur Verzögerung der Anforderungen des Hochschaltvorgangs im Fall eines schnellen Anhebens des Pedals mit einer Geschwindigkeit höher als eine gegebene Schwelle aufweist.

7. Fahrhilfe-Verfahren einer Antriebseinheit eines Fahrzeugs, das einen Antriebsmotor, eine Kupplung und ein Schaltgetriebe mit manueller Steuerung des Schaltvorgangs aufweist, wobei das Fahrzeug mit einem Kontrollsystem mit einem Rechner ausgestattet ist, der die Anzeige eines empfohlenen Gangs für den Fahrer abhängig von einer Information über den Willen des Fahrers und unter Berücksichtigung einerseits einer Gruppe von Parametern bezüglich der Fahrbedingungen des Fahrzeugs in jedem Zeitpunkt und andererseits von einem Kennfeld von Gangwechselgesetzen steuert, von dem ausgehend abhängig von der Geschwindigkeit des Fahrzeugs in jedem Zeitpunkt der zu empfehlende Gang für einen optimierten Kraftstoffverbrauch und einen minimalen Schadstoffausstoß bestimmt wird, **dadurch gekennzeichnet, dass** der empfohlene Gang durch aufeinanderfolgende Schritte korrigiert wird, indem nacheinander eine Gruppe von Beanspruchungen bezüglich der Sicherheit und des Fahrkomforts berücksichtigt werden, wobei jeder Schritt bezüglich des vorhergehenden prioritär ist, so dass der schließlich empfohlene Gang einen optimalen Kompromiss zwischen diesen verschiedenen Beanspruchungen darstellt, indem die Fahrsicherheit bevorzugt wird.

8. Verfahren nach Anspruch 7, **dadurch gekennzeichnet, dass** der Rechner mehrere getrennte Rechenmodule enthält, die jeder der zu beachtenden Beanspruchungen zugeteilt sind, und dass in jedem Korrekturschritt das entsprechende Modul die Relevanz des Werts des im vorhergehenden Schritt empfohlenen Gangs mit der Beanspruchung überprüft, die das Modul berücksichtigt, und, je nach dem Ergebnis der Überprüfung, entweder den direkten Übergang zum nächsten Schritt mit Beibehaltung des im vorhergehenden Schritt empfohlenen Gangs oder eine Veränderung dieses empfohlenen Gangs in Auf- oder Abwärtsrichtung bestimmt.

9. Verfahren nach einem der Ansprüche 7 und 8, bei dem die Information über den Willen des Fahrers durch den Niederdrückgrad des Gaspedals dargestellt wird, **dadurch gekennzeichnet, dass** die Niederdrückgeschwindigkeit des Pedals gemessen wird und ein langsames Niederdrücken unter einer gegebenen Geschwindigkeit jede Gangwechselforderung in Abwärtsrichtung verhindert, ohne ein Hochschalten im Fall einer Erhöhung der Geschwindigkeit des Fahrzeugs zu verbieten.

10. Verfahren nach einem der Ansprüche 7, 8 und 9, **dadurch gekennzeichnet, dass** jede nicht gesicherte Gangwechselforderung verhindert wird, wobei die Empfehlung fixiert ist.
